# Europäisches Patentamt

## European Patent Office

## Office européen des brevets

(11) Veröffentlichungsnummer:

# 0 088 289
## A2

(12) **EUROPÄISCHE PATENTANMELDUNG**

(21) Anmeldenummer: 83101773.6

(22) Anmeldetag: 23.02.83

(51) Int. Cl.³: **H 04 Q 3/62,** H 04 Q 3/10, H 04 M 3/48

(30) Priorität: 04.03.82 CH 1317/82

(43) Veröffentlichungstag der Anmeldung: 14.09.83 Patentblatt 83/37

(84) Benannte Vertragsstaaten: CH LI NL

(71) Anmelder: **SIEMENS-ALBIS AKTIENGESELLSCHAFT, EGA1/Verträge und Patente Postfach, CH-8047 Zürich (CH)**

(72) Erfinder: **Zwicky, Robert, Sonnenbergstrasse 13, CH-8102 Oberengstringen (CH)**
Erfinder: **Rippstein, Eugen, Brunnenzelgstrasse 9, CH-8904 Aesch (CH)**

(54) **Verfahren für eine Wahlaufforderungszeichen vom Öffentlichen Fernsprechnetz empfangende Fernmelde-, insbesorndere Fernsprechnebenstellenanlage.**

(57) Fernmeldenebenstellenanlagen mit Verkehr zum öffentlichen Fernsprechnetz müssen von diesem ausgesendete Wahlaufforderungszeichen empfangen können. Solche Zeichen können länderspezifisch und abhängig von der jeweils von einem Nebenstellenteilnehmer gewählten Amtsrufnummer an beliebiger Stelle innerhalb der Ziffernfolge auftreten. Das Verfahren ermöglicht das selbsttätige Erkennen eines derartigen Wahlaufforderungszeichens in einer Nebenstellenanlage mit gleichzeitiger Markierung der Stelle innerhalb der Wahlziffernfolge, wo das Zeichen aufgetreten ist. Dazu wird jeweils beim Beginn des Aussendens einer Wahlziffer, die in einem vorgegebenen Bereich der zum Aufbau einer Amtsverbindung notwenigen Wahlziffern liegt, ein Zeitglied ausgelöst und gleichzeitig bei jedem Auslösen des Zeitgliedes ein am Verbindungsweg zwischen der wählenden Teilnehmerstelle (TN) und dem Amtsverbindungssatz (AS) angeordneter Empfänger (WTE) für Wahlaufforderungszeichen aktiviert. Mit jedem Auslösen des Zeitgliedes wird eine Information über die Anzahl der seit Beginn des vorgegebenen Bereiches gewählten Ziffern festgehalten und bei Feststellung eines Wahlaufforderungszeichens durch den Empfänger (WTE) das Zeitglied zurückgesetzt, der Empfänger (WTE) unwirksam geschaltet und in einem die gewählten Ziffern aufnehmenden Speicher (WSP) eine Markierung «Warten auf ein Wahlaufforderungszeichen» an der enstprechenden Stelle innerhalb der Wahlziffernfolge festgehalten. Der Inhalt des Speichers (WSP) kann zum Zwecke der selbsttätigen Wahlwiderholung einem Rufnummerngeber zugeführt werden, der damit in der Lage ist, erforderlichenfalls ein zwischen den einzelnen Ziffern auftretendes Wahlaufforderungszeichen abzuwarten.

SIEMENS-ALBIS AG — 1 —

Zürich

Verfahren für eine Wahlaufforderungszeichen vom öffentlichen Fernsprechnetz empfangende Fernmelde-, insbesondere Fernsprechnebenstellenanlage

Die vorliegende Erfindung betrifft ein Verfahren gemäss dem Oberbegriff des Anspruches 1.

In Fernsprechnebenstellenanlagen können die Teilnehmer üblicherweise neben einer zu einem an der gleichen Nebenstellenanlage angeschlossenen Teilnehmer führenden Verbindung auch eine Amtsverbindung zu einem am öffentlichen Fernsprechnetz angeschlossenen Teilnehmer aufbauen. Zur Beschränkung des Amtsverkehrs kann eine Ziffernsperreinrichtung vorgesehen werden, die im Zusammenwirken mit einem Wahlbewerter dafür sorgt, dass nur Teilnehmer mit der entsprechenden Berechtigung eine Verbindung zum öffentlichen Fernsprechnetz aufbauen können. Wünscht ein berechtigter Teilnehmer eine Amtsverbindung, dann wählt er vor den einzelnen Wahlziffern eine Kennziffer. Aufgrund dieser Kennziffer wird die Suche eines freien Amtsverbindungssatzes und dessen Durchschaltung zum rufenden Teilnehmer veranlasst.

Moderne Fernsprechnebenstellenanlagen sind für den Anschluss von Teilnehmerstellen mit Impulswahl oder Tonfrequenzwahl ausgelegt. Wünscht ein Tonfrequenzwahl-Teilnehmer eine Verbindung zum öffentlichen Fernsprechnetz, in welchem die Wahlinformationen beispielsweise nach dem Impulswahlverfahren oder einem anderen von dem in der Nebenstellenanlage verwendeten Tonfrequenzwahlverfahren abweichenden Wahlverfahren übertragen werden, dann ist neben der erwähnten Bewertung noch eine Umsetzung der von diesem Teilnehmer abgegebenen Tonfrequenzzeichen erforderlich, bevor diese an das öffentliche Netz weitergeleitet werden können. Werden hingegen im öffentlichen Netz die Wahlinformationen nach dem gleichen Tonfrequenzwahlverfahren übertragen, dann ist diese Umsetzung nicht notwendig; es findet lediglich eine Zwischenspeicherung mit Bewertung und anschliessend gegebenenfalls die Weiterleitung an einen Amtsverbindungssatz statt. Um nun zu verhindern, dass in beiden Fällen die Tonfrequenzzeichen schon vor der Umsetzung bzw. Bewertung in den Amtsverbindungssatz und von dort über die Amtsleitung in ein Vermittlungsamt des öffentlichen Netzes gelangen und bei unzulässiger Dauer Störungen hervorrufen, ist es bekannt (NL-Anmeldung 7907263), den Verbindungsweg zwischen dem wählenden Teilnehmer und dem Amtsverbindungssatz an geeigneter Stelle rechtzeitig wenigstens während der Abgabe von Wählzeichen durch einen Teilnehmer aufzutrennen. In den Pausen zwischen den einzelnen Zeichen oder Zeichengruppen bleibt der Verbindungsweg hingegen durchgeschaltet, damit eine Signalisierung vom Amt zum Teilnehmer, wie z.B. die Uebertragung eines Besetztzeichens, eines zweiten Wähltones oder das Melden des gerufenen Teilnehmers, bereits während dem Wählvorgang möglich ist.

Es ist nun wünschenswert, in derartigen Fernsprechnebenstellenanlagen das Leistungsmerkmal der Wahlwiederholung einzuführen, d. h. das ein- oder mehrmalige selbsttätige Aussenden von Rufnummern zu ermöglichen. Dazu ist es notwendig, diese Rufnummern bei der erstmaligen durch den Teilnehmer erfolgenden Wahl in einen Rufnummerngeber einzuspeichern, der dann die einzelnen Wahlziffern auf Abruf in der richtigen Reihenfolge automatisch ausgibt. Dazu müssen dem Rufnummerngeber neben den Wahlziffern auch Informationen darüber bekannt sein, ob im Laufe der Wahl auf ein Wahlaufforderungszeichen (Wählton) gewartet werden muss und gegebenenfalls an welcher Stelle innerhalb der Ziffernfolge dieses Zeichen abgewartet werden muss. Das Wahlaufforderungszeichen kann länderspezifisch und abhängig von der jeweils gewählten Amtsrufnummer an beliebiger Stelle innerhalb der Rufnummer auftreten.

Der vorliegenden Erfindung liegt die Aufgabe zugrunde, in einer Fernsprechnebenstellenanlage der kurz beschriebenen Art das selbsttätige Erkennen eines an beliebiger Stelle innerhalb der Ziffernfolge einer Rufnummer auftretenden Wahlaufforderungszeichens zu ermöglichen, um damit zum Zwecke der Wahlwiederholung einem Rufnummerngeber neben den Wahlziffern auch eine Markierung über die zeitliche Lage eines abzuwartenden Wahlaufforderungszeichens zuzuführen. Dies gelingt durch die im Kennzeichen des Anspruches 1 angegebenen Massnahmen. Weiterbildungen der Erfindung sind in weiteren Ansprüchen angegeben.

Die Erfindung gestattet in vorteilhafter Weise die selbsttätige zeitgerechte Eingabe von Wahlpausen in einen Rufnummerngeber, aufgrund welcher Eingabe der Rufnummerngeber bei der Ausgabe einer Rufnummer erforderlichenfalls an der richtigen Stelle innerhalb der Ziffernfolge das Eintreffen eines Wahlaufforderungszeichens abwartet, bevor er weitere Ziffern ausgibt. Besondere Aktivitäten von seiten des wählenden Teilnehmers sind hiezu nicht erforderlich.

Die Erfindung wird nachfolgend anhand von Zeichnungen beispielsweise näher erläutert. Es zeigt :

Fig.1 den prinzipiellen Aufbau einer Fernsprechnebenstellenanlage, in der die Erfindung Anwendung findet

Fig.2 im Zusammenhang mit der Erfindung interessierende Einzelheiten dieser Fernsprechnebenstellenanlage

Fig.3 der Erläuterung der Erfindung dienende Impulsdiagramme

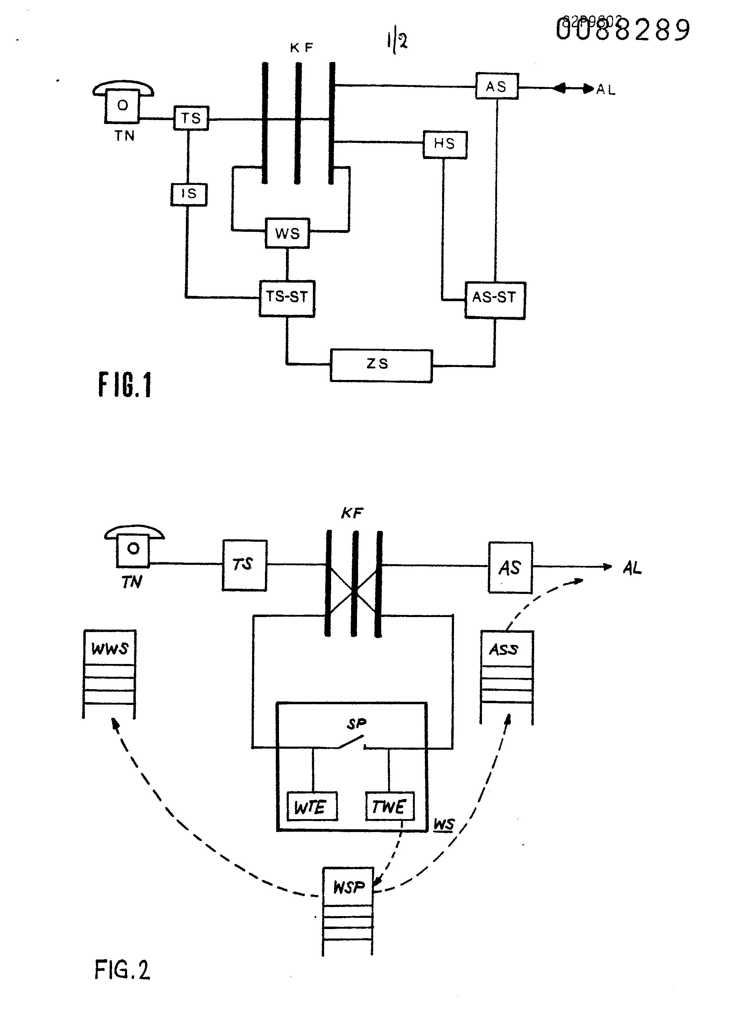

In Fig.1 sind Einzelheiten einer vollelektronischen Fernsprechnebenstellenanlage dargestellt, soweit sie im Zusammenhang mit der Erfindung von Interesse sind. Die Bedeutung der einzelnen Systemteile wird aus der nachfolgenden kurzen Beschreibung der beim Aufbau verschiedenartiger Verbindungen in dieser Anlage ablaufenden Vorgänge ersichtlich. Es wird dabei angenommen, dass ein eine Verbindung wünschender Teilnehmer seine Wahlinformation nach dem Prinzip der Tonfrequenztastwahl mit oder ohne Gleichstrom-Begleitzeichen abgibt. Dies ist jedoch nicht Bedingung für die Anwendung der Erfindung.

Hebt ein Teilnehmer TN seinen Handapparat ab, wird in der zugehörigen Teilnehmerschaltung TS das Schliessen der Teilnehmerleitungsschleife erkannt. Das einer Vielzahl von Teilnehmern TN zugeordnete Teilnehmersteuerwerk TS-ST fragt ständig den durch die Indikationsstellen IS angezeigten Zustand der Teilnehmerschleifen dieser Teilnehmer nacheinander ab (Scan-Prinzip) und erkennt daher innerhalb eines Abfragezyklus eine Neubelegung durch den Teilnehmer TN. Das Teilnehmersteuerwerk TS-ST meldet diese Neubelegung dem zentralen Steuerwerk ZS, das daraufhin einen freien Wahlaufnahmesatz WS und einen freien Weg vom Teilnehmer TN über das Koppelfeld KF zu diesem Wahlaufnahmesatz WS sucht. Das Koppelfeld KF weist elektronische Koppelpunkte, wie z.B. Transistoren, auf und kann ein- oder mehrstufig sein. Nach erfolgter Durchschaltung sendet der Wahlaufnahmesatz WS dem Teilnehmer TN einen Wählton als Wahlaufforderung. Ein Wahlempfänger im Wahlaufnahmesatz WS nimmt die beispielsweise in einem $2x(\frac{1}{4})$ Frequenzcode eintreffenden Wählzeichen auf, bestimmt deren Frequenz und setzt die erkannte Kombination des Wählzeichens in ein Codewort um. Sobald der Wahlaufnahmesatz WS die erste Wahlziffer decodiert hat, gibt er diese an das Teilnehmersteuerwerk TS-ST, wo sie - wie auch alle nachfolgenden Ziffern - gespeichert und zudem an das zentrale Steuerwerk ZS weitergeleitet wird. Das zentrale Steuerwerk ZS bewertet die erste Ziffer; handelt es sich dabei nicht um eine Kennziffer, dann erkennt das zentrale Steuerwerk ZS den Wunsch nach einer Intern-(Haus)verbindung und sucht demzufolge einen freien Internverbindungssatz HS und einen freien Weg über das Koppelfeld KF vom wählenden Teilnehmer TN zum freien Internverbindungssatz HS. Sobald die vom Teilnehmer TN ausgesendete Wahlinformation vollständig ist, werden die Ziffern vom Teilnehmersteuerwerk TS-ST dem zentralen Steuerwerk ZS übergeben, das den zu rufenden Teilnehmer ermittelt, einen freien Weg vom Internverbindungssatz HS über das Koppelfeld KF zu diesem Teilnehmer sucht und den Weg vom wählenden Teilnehmer TN zum Internverbindungssatz HS durchschaltet. Hierauf wird dem gerufenen Teilnehmer ein Rufsignal aus seiner Teilnehmerschaltung und dem rufenden Teilnehmer ein Rufkontrollsignal aus dem Internverbindungssatz HS zugeführt. Wenn der gerufene Teilnehmer sich meldet, erkennt die zugehörige Teilnehmerschaltung Schleifenschluss, worauf die Verbindung zwischen dem rufenden und dem gerufenen Teilnehmer durchgeschaltet wird. Der erwähnte Internverbindungssatz HS wird immer dann belegt, wenn eine Internverbindung, d. h. ein zwei der gleichen Nebenstellenanlage angehörende Teilnehmer miteinander verbindender Sprechweg aufzubauen ist.

Wenn der hiezu berechtigte Teilnehmer TN jedoch eine Amtsverbindung, d. h. eine Verbindung zu einem nicht an der Nebenstellenanlage angeschlossenen Teilnehmer des öffentlichen Fernsprechnetzes aufbauen will, muss er vor der eigentlichen Wahlinformation eine Kennziffer, z. B. eine "0" wählen. Aufgrund der Kennziffer sucht das zentrale Steuerwerk ZS einen freien Amtsverbindungssatz AS und verbindet diesen über das Koppelfeld KF mit dem Teilnehmer TN. Der Teilnehmer TN ist dann gemäss Fig.2 über seine Teilnehmerschaltung TS, das Koppelfeld KF, den Wahlaufnahmesatz WS, wieder das Koppelfeld KF und den Amtsverbindungssatz AS mit einer abgehenden Amtsleitung AL verbunden. Der Teilnehmer TN erhält auf diese Weise einen Wählton als Wahlaufforderung aus dem Wahlaufnahmesatz WS zugeführt. Die vom Teilnehmer abgegebene Wahlinformation wird im Wahlaufnahmesatz WS aufgenommen und gelangt über das Teilnehmersteuerwerk TS-ST zum Amtsverbindungssatz-Steuerwerk AS-ST, welches sie über den Amtsverbindungssatz AS und über eine von diesem abgehende Amtsleitung AL an das angeschlossene Amt, z. B. ein Ortsamt des öffentlichen Netzes abgibt. Ist das öffentliche Fernsprechnetz beispielsweise nur zur Uebertragung der Wahlinformationen nach dem Prinzip der Impulswahl vorgesehen, dann müssen die Tonfrequenzzeichen in Impulswahlzeichen umgesetzt werden. Hierzu steuert das Amtsverbindungssatz-Steuerwerk AS-ST im Amtsverbindungssatz AS einen Impulsgeber, der die Wahlinformation in Form von Impulsserien auf die Amtsleitung AL gibt.

Wie Fig.2 zeigt, enthält der Wahlaufnahmesatz WS einen Wählzeichenempfänger TWE zum Empfang der vom Teilnehmer TN abgegebenen Wahlziffern und einen Wählton-empfänger WTE zum Empfang von vom Amt eintreffenden Wahlaufforderungssignalen (Wählton). Die beiden Empfänger sind am Verbindungsweg zwischen der Teilnehmerschaltung TS und dem Amtsverbindungssatz AS angeschlossen. Dieser Verbindungsweg ist zwischen den Anschlüssen der beiden Empfänger mittels eines Schalters SP auftrennbar. Der Wähltonempfänger WTE kann einen Wählton vom Amt her nur empfangen, wenn er vorgängig wirksam geschaltet worden ist und der Schalter SP geöffnet, d. h. der Verbindungsweg aufgetrennt ist. Zudem ist der Wähltonempfänger WTE mit einer Ansprechverzögerung behaftet, nach der er erst einen amtsseitig anliegenden Wählton eindeutig erkennen kann, worauf er einen Anreiz "Wählton erkannt" abgibt. Mindestens während der Dauer jedes Tastendruckes eines wählenden Teilnehmers TN wird der Verbindungsweg im Wahlaufnahmesatz WS durch Oeffnen des Schalters SP aufgetrennt und damit verhindert, dass die im Wahlaufnahmesatz WS ein-treffenden Tonfrequenzsignale in unerwünschter Weise auch zum Amtsverbindungssatz AS und damit in das öffentliche Fernsprechnetz gelangen können. Zudem ist damit verhindert, dass andere Störgeräusche von der Teilnehmerstelle TN her während der Wählphase zum Wähltonempfänger WTE gelangen und dort störende Frequenzen vortäuschen können. Gleichzeitig mit jedem Tastendruck wird der Wähltonempfänger WTE aktiviert, damit ein anschliessend allenfalls eintreffender Wählton möglichst rasch erkannt wird.

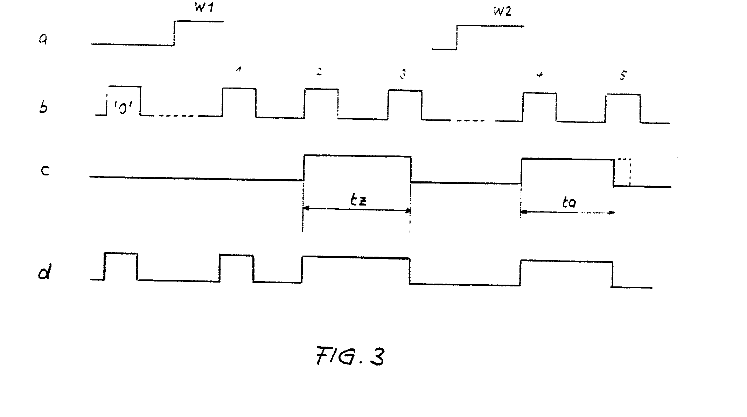

Anhand eines in der Anordnung gemäss Fig.2 vor sich gehenden und in Fig.3 dargestellten Ablaufes wird die Erfindung nun im einzelnen erläutert. Es wird dabei davon ausgegangen, dass ein Teilnehmer von seiner Teilnehmerstelle TN aus eine Amtsver-bindung einleitet, indem er als erste Ziffer eine Kennzahl, üblicherweise eine '0' wählt. Der nach Wahl dieser Kennziffer der Teilnehmerstelle TN zugeführte Wählton W1 (Fig.3a) werde anlageintern erzeugt. Ferner sei angenommen, es handle sich um eine Amtsverbindung, bei der innerhalb der Wählphase zum Amt ein zweiter Wählton W2 (Fig.3a) vom Amt her abgewartet werden muss, wie dies nicht nur in Amtsnetzen, sondern auch in Privat- und Sondernetzen der Fall sein kann. An sich kann ein solcher 2. Wählton abhängig von der gewählten Rufnummer an beliebiger Stelle in der Ziffern-folge (Fig.3b) auftreten. Beispielsweise soll das Erscheinen eines zweiten Wähltones im Bereich zwischen der zweiten und der sechsten Wahlziffer möglich sein. Der Teilnehmer weiss natürlich aufgrund des Fernsprechverzeichnisses genau, an welcher Stelle er auf den zweiten Wählton warten muss. Im vorliegenden Fall sei dies nach Wahl der dritten Ziffer. Für die Erfindung ist es jedoch belanglos, wo der zweite Wählton innerhalb des angenommenen Bereiches tatsächlich erscheint. Der zweite Wählton soll der Teilnehmerstelle TN nach dessen Erkennen im Wähltonempfänger WTE original, d. h. unverändert vom Amt her zugeleitet werden.

0088289

Nach Wahl der Kennziffer erhält der Teilnehmer wie erwähnt einen ersten Amtswählton aus dem Wahlaufnahmesatz WS zugeführt. Dabei wird die Verbindung zwischen der Teilnehmerstelle TN und dem zuvor belegten Amtsverbindungssatz AS zu Beginn der Tastenbetätigung im Wahlaufnahmesatz WS über den Schalter SP aufgetrennt und nach dem Loslassen der Taste wieder durchgeschaltet (Fig.3d). Mit dem Erscheinen des Wähltones W1 kann der Teilnehmer die erste Wahlziffer abgeben, was die Abschaltung des Wähltones W1 zur Folge hat. Der Teilnehmer wählt nun zügig weiter, bis und mit der dritten Ziffer, nach der er wie angenommen einen zweiten Wählton W2 aus dem Amt abwarten muss. Mit dem Betätigen der Zifferntaste für die zweite Wahlziffer - die die erste Ziffer innerhalb des angenommenen Wähltonbereiches darstellt - wird ein nicht weiter dargestelltes Zeitglied ausgelöst (Fig.3c). Gleichzeitig wird neben der bei jedem Tastendruck erfolgenden Auftrennung des Verbindungsweges im Wahlaufnahmesatz WS auch der Wähltonempfänger WTE aktiviert, so dass er zum Erkennen eines gegebenenfalls vom Amt eintreffenden Wähltones bereit ist. Die Zeitkonstante $t_z$ des Zeitgliedes ist etwas länger als die Ansprechzeit $t_a$ des Wählton-empfängers WTE. Solange das Zeitglied aktiv ist, wird die beim Loslassen einer Zifferntaste vorgesehene erneute Durchschaltung der Verbindung unterbunden und der entsprechende Anreiz "Tastendruck beendet" vorgemerkt. Die gewählten Ziffern werden in einem Speicher WSP im Wahlaufnahmesatz WS in der Reihenfolge ihres Eintreffens festgehalten, dann einem dem Amtsverbindungssatz AS zugeordneten Speicher ASS zugeführt und von dort auf die Amtsleitung AL gegeben. Solange das Zeitglied läuft, ist die Ausgabe von Wahlziffern auf die Amtsleitung AL unterbunden. Damit wird verhindert, dass ein vom öffentlichen Amt auf der Amtsleitung AL anliegender Wählton beim Empfang einer Wahlziffer im Amt in bekannter Weise abgeschaltet wird und daher infolge zu kurzer Dauer im Wähltonempfänger WTE nicht erkannt werden kann. Im Speicher WSP wird auch die Anzahl der gewählten Ziffern registriert. Mit dem Ablaufen des Zeitgliedes bewirkt der vorgemerkte Anreiz "Tastendruck beendet" die Durchschaltung der Verbindung zwischen der Teilnehmerstelle TN und dem Amtsverbin-dungssatz AS und der Wähltonempfänger WTE wird unwirksam geschaltet. Zugleich wird im Amtsverbindungssatz AS das Auszählen von Wahlziffern auf die Amtsleitung AL wieder freigegeben. Die bereits vor Ablauf des Zeitgliedes erfolgte Betätigung der Taste für die dritte Wahlziffer hat keinen Einfluss auf diesen Ablauf, denn das Zeitglied wird durch einen Tastendruck nur dann beeinflusst und wirksam geschaltet, wenn es nicht bereits wirksam ist. Nach Wahl der dritten Ziffer wartet der Teilnehmer auf das Erscheinen des zweiten Wähltones W2, um hierauf mit der Wahl fortzufahren.

0088289
82P9802

Mit der Betätigung der nächsten Zifferntaste wird erneut das Zeitglied ausgelöst, der Wähltonempfänger WTE aktiviert und die Verbindung aufgetrennt. Der beim Loslassen der Taste für die 4. Ziffer entstehende Anreiz "Tastendruck beendet" wird wiederum zurückgehalten. Da der Teilnehmer die vierte Wahlziffer in bekannter Weise "in den Wählton hinein" gewählt hat, wird der Wähltonempfänger WTE nach Ablauf seiner Ansprechzeit das Vorliegen eines Wähltons erkennen und einen entsprechenden Anreiz abgeben. Dieser Anreiz wird nun dazu ausgenützt, in einem Wahlwiederholungsspeicher WWS eines Rufnummerngebers, dem die gewählten Ziffern zum Zwecke einer späteren selbsttätigen Wahlwiederholung aus dem Speicher WSP zugeleitet werden, eine Markierung einzutragen, die darüber Aufschluss gibt, an welcher Stelle innerhalb der Ziffernfolge der Wählton aufgetreten bzw. wo bei einer Rufnummernausgabe auf den zweiten Wählton zu warten ist. Hiezu wird die im erwähnten Speicher WSP registrierte Anzahl der bereits gewählten Wahlziffern herangezogen. Im vorliegenden Beispiel wird die Markierung zwischen der dritten und vierten Ziffer im Wahlwiederholungsspeicher WWS eingetragen. Gleichzeitig mit dem Erkennen des Wähltones im Wähltonempfänger WTE wird das Zeitglied wiederum zurückgesetzt und der beim Loslassen der Taste für die 4. Wahlziffer zurückgehaltene Anreiz "Tastendruck beendet" schaltet die Verbindung über den Schalter SP im Wahlaufnahmesatz WS durch. Die Wahl der fünften und weiterer Ziffern hat keinen Einfluss mehr auf das Zeitglied, wenn kein weiterer Wählton zu erwarten ist. Ist hingegen zwischen den folgenden Ziffern ein weiterer Wählton vorgesehen, geht auch dessen Erkennung und Markierung im Wahlwiederholungsspeicher WWS wie beschrieben vor sich.

Zur Vereinfachung des Steuerungsablaufes für die beschriebenen Vorgänge kann die Aktivierung des Zeitgliedes jeweils davon abhängig gemacht werden, ob im betreffenden Zeitpunkt vom Amtsverbindungssatz AS gerade Wahlziffern auf die Amtsleitung AL ausgegeben werden. Solange dies nämlich der Fall ist, wird vom Amt kein Wählton ausgesendet, weshalb eine Wirksamschaltung des Zeitgliedes und des Wähltonempfängers WTE an sich nicht erforderlich ist.

PATENTANSPRUECHE

1. Verfahren für eine Wahlaufforderungszeichen vom öffentlichen Fernsprechnetz empfangende Fernmelde-, insbesondere Fernsprechnebenstellenanlage, in der eine vom Frei- in den Wählzustand übergehende, eine Amtsverbindung wünschende Teilnehmerstelle über ein Koppelfeld mit einem Wahlaufnahmesatz und nach Wahl einer Kennziffer vom Wahlaufnahmesatz aus über das gleiche Koppelfeld mit einem Amtsverbindungssatz verbunden und der Verbindungsweg zwischen der wählenden Teilnehmerstelle und dem Amtsverbindungssatz jeweils mindestens während der Abgabe von Wählzeichen durch die Teilnehmerstelle aufgetrennt wird, und in der vom öffentlichen Fernsprechnetz eintreffende Wahlaufforderungszeichen vom Amtsverbindungssatz über diesen Verbindungsweg zur wählenden Teilnehmerstelle gelangen, dadurch gekennzeichnet, dass jeweils beim Beginn des Aussendens einer Wahlziffer, die in einem vorgegebenen Bereich der zum Aufbau einer Amtsverbindung notwendigen Wahlziffern liegt, innerhalb dem ein Wahlaufforderungszeichen zu erwarten ist, ein Zeitglied ausgelöst wird, sofern dieses nicht schon ausgelöst ist, wobei der genannte Verbindungsweg bis zum Ablauf des Zeitgliedes aufgetrennt bleibt, dass gleichzeitig bei jedem Auslösen des Zeitgliedes ein zwischen der Trennstelle (SP) und dem Amtsverbindungssatz (AS) am Verbindungsweg angeordneter Empfänger (WTE) für Wahlaufforderungszeichen aktiviert wird und bis zum Ablauf des Zeitgliedes wirksam bleibt und dass während dieser Zeitspanne die Abgabe von Wählzeichen zum öffentlichen Fernsprechnetz unterbunden wird, dass mit jedem Auslösen des Zeitgliedes eine Information über die Anzahl der seit Beginn des vorgegebenen Bereiches gewählten Ziffern festgehalten wird, und dass bei Feststellung eines Wahlaufforderungszeichens durch den Empfänger (WTE) das Zeitglied zurückgesetzt, der Verbindungsweg durchgeschaltet, der Empfänger (WTE) unwirksam geschaltet und in einem die gewählten Ziffern aufnehmenden Speicher (WSP) eine Markierung "Warten auf ein Wahlaufforderungszeichen" an der entsprechenden Stelle innerhalb der Wahlziffernfolge eingetragen wird.

2. Verfahren nach Anspruch 1, dadurch gekennzeichnet, dass die Zeitkonstante des Zeitgliedes grösser als die minimale Ansprechzeit des Empfängers (WTE) ist.

3. Verfahren nach Anspruch 1 oder 2, dadurch gekennzeichnet, dass das Zeitglied nur dann ausgelöst wird, wenn vom Amtsverbindungssatz (AS) keine Wählzeichen an das öffentliche Fernsprechnetz abgegeben werden.

0088289

4. Verfahren nach einem der vorangehenden Ansprüche, d a d u r c h  g e k e n n - z e i c h n e t , dass die gewählten Ziffern und die Markierung "Warten auf ein Wahlaufforderungszeichen" zum Zwecke der selbsttätigen Wahlwiederholung einem Speicher (WWS) in einem Rufnummerngeber zugeführt werden.

FIG.1

FIG.2

FIG. 3